# EUROPÄISCHE PATENTSCHRIFT

(11) **EP 1 125 071 B1**
(45) Veröffentlichungstag und Bekanntmachung des Hinweises auf die Patenterteilung: **17.07.2002**
(21) Anmeldenummer: 99953899.4
(22) Anmeldetag: 20.10.1999
(51) Int. Cl.: F16H 61/46

(54) **HYDROSTATISCHES GETRIEBE**
HYDROSTATIC GEAR UNIT
TRANSMISSION HYDROSTATIQUE

(30) Priorität: 30.10.1998 DE 19850162
(43) Veröffentlichungstag der Anmeldung: 22.08.2001
(73) Patentinhaber: BRUENINGHAUS HYDROMATIK GMBH, 89275 Elchingen (DE)
(72) Erfinder: STICKEL, Oskar, D-89129 Langenau (DE)
(74) Vertreter: Körfer, Thomas, Dipl.-Phys.
(86) Internationale Anmeldenummer: EP9907971
(87) Internationale Veröffentlichungsnummer: WO0026563

(56) Entgegenhaltungen:
- EP-A- 0 279 152
- EP-A- 0 484 526
- WO-A-94/09293
- PATENT ABSTRACTS OF JAPAN vol. 1995, no. 01, 28. Februar 1995 (1995-02-28) -& JP 06 280811 A (HITACHI CONSTR MACH CO LTD), 7. Oktober 1994 (1994-10-07)
- PATENT ABSTRACTS OF JAPAN vol. 007, no. 261 (M-257), 19. November 1983 (1983-11-19) & JP 58 142063 A (ISHIKAWAJIMA HARIMA JUKOGYO KK), 23. August 1983 (1983-08-23)

## Beschreibung

Die Erfindung betrifft ein hydrostatisches Getriebe insbesondere zum Antrieb von Fahrzeugen.

Aus der JP 06 280811 ist ein hydrostatisches Getriebe nach dem Oberbegriff des Anspruchs 1 bekannt.

Aus der WO 94/09293 ist auch ein hydrostatisches Getriebe bekannt. Dabei ist eine Hydropumpe über ein Fahrtrichtungsventil und ein Bremsventil mit einem verstellbaren Hydromotor verbunden. Das Verdrängungsvolumen des Hydromotors ist über eine Verstelleinrichtung einstellbar, die über ein Regelventil angesteuert wird. Zwischen dem Fahrtrichtungsventil und dem Bremsventil ist ein Wechselventil angeordnet, daß den von der Hydropumpe erzeugten Arbeitsdruck über eine Steuerleitung dem Regelventil zuführt. Das Verdrängungsvolumen des Hydromotors wird deshalb abhängig von dem von der Hydropumpe erzeugten Arbeitsdruck eingestellt.

Um zu verhindern, daß der Hydromotor mit einer zu hohen Drehzahl betrieben wird, ist an der Abtriebswelle des Hydromotors ein Drehzahlsensor angeordnet, der einem Mikrocontroller ein geeignetes elektrisches Steuersignal zuführt. Der Mikrocontroller setzt dieses in ein elektrisches Gebersignal um, das einem an dem Regelventil angeordneten elektromagnetischen Geber zugeführt wird. Wenn die Drehzahl an der Abtriebswelle des Rotors einen vorgegebenen Schwellwert überschreitet, wirkt der Mikrocontroller über das Regelventil auf die Verstelleinrichtung so ein, daß die Drehzahl des Hydromotors verringert wird.

Da dem Hydromotor ein Lastschaltgetriebe mit zwei Schaltgängen nachgeordnet ist, wird die vorstehend beschriebene Steuercharakteristik in Abhängigkeit von dem eingelegten Gang an dem Lastschaltgetriebe übersteuert.

Bei diesem bekannten hydrostatischen Getriebe ist jedoch nachteilig, daß die Ansteuerung des Hydromotors relativ träge ist, da der auf das Regelventil einwirkende Steuerdruck aus den Arbeitsleitungen abgeleitet wird. Weiterhin ist nachteilig, daß der vorgesehene Schutz zur Drehzahlbegrenzung des Hydromotors relativ aufwendig ist, da es eines elektronischen Drehzahlsensors, eines elektronischen Mikrocontrollers und eines elektromagnetischen Gebers bedarf. Diese elektronischen Komponenten führen zu einem erhöhten Kostenaufwand.

Der Erfindung liegt deshalb die Aufgabe zugrunde, ein hydrostatisches Getriebe zu schaffen, das eine schnelle und trägheitsarme Angleichung des Verdrängungsvolumens des Hydromotors an die gewünschte Fahrgeschwindigkeit gestattet und gleichzeitig einen wirksamen Schutz gegen eine überhöhte Drehzahl des Hydromotors gewährleistet.

Die Erfindung wird durch die kennzeichnenden Merkmale des Anspruchs 1 in Verbindung mit den gattungsbildenden Merkmalen gelöst.

Der Erfindung liegt die Erkenntnis zugrunde, daß ein von einer Vorsteuereinrichtung erzeugter Steuerdruck sowohl zum Ansteuern des Fahrsteuerventils als auch des Regelventils herangezogen werden kann. Dabei wird durch den von der Vorsteuereinrichtung erzeugten Steuerdruck unmittelbar der Förderstrom und die Förderrichtung des Hydraulikmediums von der Hydropumpe zu dem Hydromotor bestimmt und andererseits gleichzeitig das Verdrängungsvolumen des Hydromotors festgelegt. Durch diese Doppelfunktion des von der Vorsteuereinrichtung erzeugten Steuerdrucks ergibt sich eine höhere Integration und ein vereinfachter Aufbau des hydrostatischen Getriebes. Gleichzeitig wird erreicht, daß das den Stelldruck für die Verstelleinrichtung regelnde Regelventil unmittelbar von dem Steuerdruck angesteuert wird und nicht mittelbar über den Arbeitsdruck in den Arbeitsleitungen. Durch manuelles Einwirken auf den Geber der Vorsteuereinrichtung hat deshalb die Bedienperson unmittelbaren Einfluß auf das Schluckvolumen des Hydromotors.

Eine weitere erfindungsgemäße Erkenntnis besteht darin, für die Ansteuerung des Regelventils die Druckdifferenz zwischen dem Steuerdruck und dem in den Arbeitsleitungen herrschenden Arbeitsdruck auszunutzen. Durch die unmittelbare Einwirkung des Arbeitsdrucks an dem Hydromotor auf das Regelventil wird ein Schutz gegen eine überhöhte Drehzahl des Hydromotors geschaffen. Wenn aufgrund eines zu hohen Drucks in der zuleitenden Arbeitsleitung eine Überlastung des Hydromotors droht, führt dieser überhöhte Arbeitsdruck über das Regelventil und die Verstelleinrichtung zu einem Ausschwenken des Hydromotors auf ein größeres Schluckvolumen und somit zu einer verringerten Drehzahl.

Die Ansprüche 2 bis 11 beinhalten vorteilhafte Weiterbildungen der Erfindung.

Entsprechend Anspruch 2 ist an die Vorsteuereinrichtung für jede Einrichtung jeweils eine separate Steuerleitung angeschlossen und das Steuerventil wird von der Druckdifferenz zwischen den beiden Steuerleitungen angesteuert. Zur Ansteuerung des Regelventils kann entsprechend Anspruch 3 von den beiden Steuerleitungen über ein Wechselventil bzw. zwei entsprechend angeordnete Rückschlagventile der jeweils höhere Steuerdruck von den Steuerleitungen ausgekoppelt werden. In entsprechender Weise kann entsprechend Anspruch 4 zur Ansteuerung des Regelventils mit dem jeweils höheren Arbeitsdruck ein mit den Arbeitsleitungen verbundenes Wechselventil bzw. zwei entsprechend angeordnete Rückschlagventile vorgesehen sein. Alternativ ist es entsprechend Anspruch 5 möglich, statt dessen ein Umschaltventil zu verwenden.

Das Regelventil ist entsprechend Anspruch 6 vorteilhaft ein 3/2-Wegeventil, das eingangsseitig mit den Arbeitsleitungen und dem Hydraulikmedium-Tank und ausgangsseitig mit einer Stellkammer der Verstelleinrichtung verbunden ist. Eine zweite Stellkammer ist entsprechend Anspruch 7 mit dem Arbeitsdruck beaufschlagt.

Vorteilhaft ist entsprechend Anspruch 8 ein Bremsventil vorgesehen, das von der Druckdifferenz in zwei mit dem Fahrsteuerventil verbundenen ersten Arbeitsleitungs-Abschnitten angesteuert wird. Durch das Bremsventil ist es möglich, in einem Schiebebetrieb, beispielsweise bei einer Talfahrt, durch den sich in den Arbeitsleitungen einstellenden Staudruck auf den Hydromotor ein Verzögerungsmoment zu übertragen. Das Bremsventil ist entsprechend Anspruch 9 ausgangsseitig über Rückschlagventile mit jeder der beiden Arbeitsleitungen verbunden. Dadurch kann das Bremsventil relativ einfach ausgestaltet werden und für beide Fahrtrichtungen in gleicher Weise verwendet werden. Entsprechend Anspruch 10 ist das Bremsventil vorzugsweise ein 3/2-Wegeventil.

Zwischen einer Druckquelle und der Vorsteuereinrichtung kann entsprechend Anspruch 11 ein Einstellventil, beispielsweise ein Inchventil, angeordnet sein, um einen Kriechgang oder Notstop-Betrieb zu ermöglichen.

Die Erfindung wird nachfolgend anhand von Ausführungsbeispielen unter Bezugnahme auf die Zeichnung näher beschrieben. In der Zeichnung zeigen:
- Fig. 1: ein erstes Ausführungsbeispiel eines erfindungsgemäßen hydrostatischen Getriebes;
- Fig. 2: ein zweites Ausführungsbeispiel eines erfindungsgemäßen hydrostatischen Getriebes; und
- Fig. 3: ein drittes Ausführungsbeispiel eines erfindungsgemäßen hydrostatischen Getriebes.

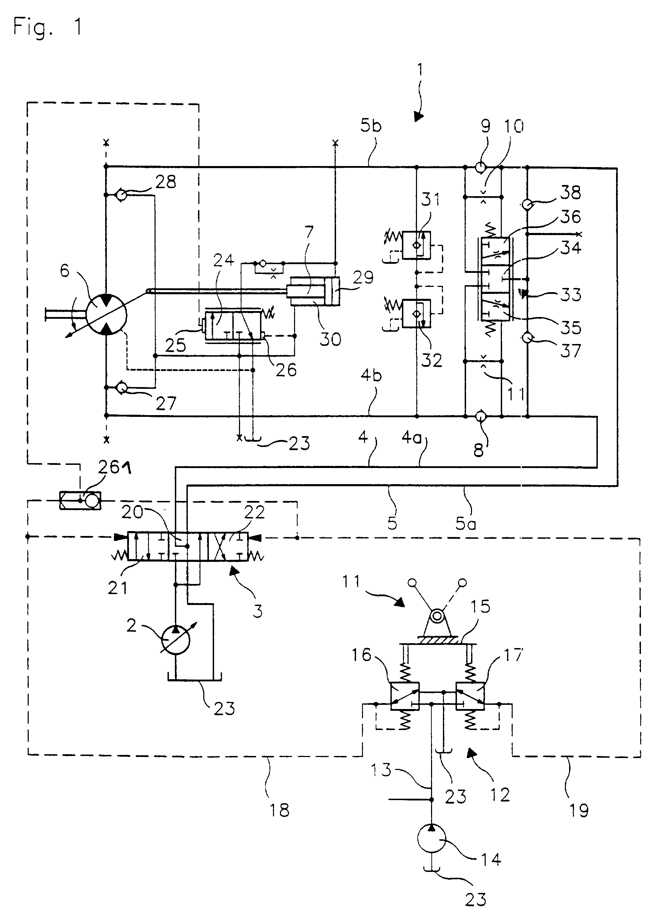

Fig. 1 zeigt ein hydraulisches Prinzipschaltbild eines ersten Ausführungsbeispiels eines erfindungsgemäßen hydrostatischen Getriebes 1. Das hydrostatische Getriebe 1 dient beispielsweise als hydrostatischer Fahrantrieb zum Antrieb eines Fahrzeuges. Es kann jedoch auch zum Antrieb eines Drehwerks, beispielsweise eines Baggers, oder anderen Antriebszwecken dienen.

Das hydrostatische Getriebe 1 umfaßt eine im Ausführungsbeispiel verstellbare Hydropumpe 2, die über ein Fahrsteuerventil 3 je nach gewünschter Fahrrichtung entweder in eine erste Arbeitsleitung 4 oder eine zweite Arbeitsleitung 5 fördert.

Die beiden Arbeitsleitungen 4 und 5 sind über einen Hydromotor 6 miteinander verbunden, dessen Verdrängungsvolumen mittels einer Verstelleinrichtung 7 verstellbar ist. Die Arbeitsleitungen 4 und 5 gliedern sich in mit dem Fahrsteuerventil 3 verbunden erste Arbeitsleitungs-Abschnitte 4a und 5a und in mit dem Hydromotor 6 verbundene zweite Arbeitsleitungs-Abschnitt 4b und 5b. Die ersten Arbeitsleitungs-Abschnitte 4a und 5b sind von den zweiten Arbeitsleitungs-Abschnitten 4b und 5b durch ein erstes Rückschlagventil 8 und ein zweites Rückschlagventil 9 voneinander getrennt, die durch Drosseln 10 und 11 überbrückt sind.

Die Fahrrichtung und die Fahrgeschwindigkeit wird durch einen Geber, beispielsweise einem Handgeber oder ein Fußpedal, einer Vorsteuereinrichtung 12 vorgegeben. Die Vorsteuereinrichtung 12 ist über eine Verbindungsleitung 13 mit einer Druckquelle 14, beispielsweise einer Hilfspumpe, verbunden. Der Geber 11 wirkt über eine Hebelmechanik 15 auf ein erstes Vorsteuerventil 16 und ein zweites Vorsteuerventil 17 ein. Bei Betätigung des Gebers 11 in der in Fig. 1 dargestellten Fahrrichtung wird das erste Vorsteuerventil 16 geöffnet und eine erste Steuerleitung 18 in Abhängigkeit von der Ausschwenkung des Gebers 11 mit Steuerdruck beaufschlagt. Umgekehrt wird eine zweite Steuerleitung 19 bei Betätigung des Gebers 11 in der in Fig. 1 gestrichelt gezeichneten Position entsprechend einer zweiten Fahrrichtung über das zweite Vorsteuerventil 17 mit Steuerdruck beaufschlagt.

Die Druckdifferenz der in den Steuerleitungen 18 und 19 herrschenden Steuerdrücke bestimmt die Stellung des Fahrsteuerventils 3, das als 5/3-Wegeventil ausgebildet ist. In der in Fig. 1 dargestellten Neutralstellung 20 des Fahrsteuerventils 3 sind die beiden Arbeitsleitungen 4 und 5 zu einem Hydraulikmedium-Tank 23 hin entlastet. Bei Beaufschlagen der ersten Steuerleitung 18 mit einem Steuerdruck wird das Fahrsteuerventil 3 in die in Fig. 1 linke Arbeitsstellung 21 verschoben, so daß die Hydropumpe 2 in die erste Arbeitsleitung 4 fördert. Umgekehrt, wird bei einer Beaufschlagung der zweiten Steuerleitung 19 mit einem Steuerdruck in der in Fig. 1 rechten Arbeitsstellung 22 des Fahrsteuerventils 3 die zweite Arbeitsleitung 5 mit einem Arbeitsdruck beaufschlagt. Dabei ist der in der Arbeitsleitung 4 bzw. 5 herrschende Arbeitsdruck vorzugsweise dem von der Vorsteuereinrichtung 11 erzeugten Steuerdruck proportional.

Zur Ansteuerung der Verstelleinrichtung 7 dient ein Regelventil 24, das im Ausführungsbeispiel als 3/2-Wegeventil ausgebildet ist. Eine erste Druckkammer 25 des Regelventils 24 ist über ein Wechselventil 261 mit den beiden Steuerleitungen 18 und 19 verbunden. In der ersten Druckkammer 25 herrscht deshalb der jeweils höhere Steuerdruck. Eine zweite, der ersten Druckkammer 25 gegenüberliegende Druckkammer 26 ist über jeweils ein Rückschlagventil 27 und 28 mit dem zweiten Arbeitsleitungs-Abschnitten 4b und 5b verbunden. In der zweiten Druckkammer 26 herrscht deshalb jeweils der höhere in den beiden Arbeitsleitungen 4 und 5 an dem Hydromotor 6 anliegende Arbeitsdruck. Die Stellung des Regelventils 24 wird deshalb von der Druckdifferenz zwischen dem höheren in den beiden Steuerleitungen herrschenden Steuerdruck und dem höheren in den beiden Arbeitsleitungen 4 und 5 an dem Hydromotor 6 herrschenden Arbeitsdruck festgelegt. Während eine erste Stellkammer 29 mit dem Ausgang des Regelventils 24 verbunden ist und somit mit einem von der Druckdifferenz zwischen dem Arbeitsdruck und dem Stelldruck abhängigen Stelldruck beaufschlagt wird, ist eine zweite Stellkammer 30 der Verstelleinrichtung 7 über die beiden Rückschlagventile 27 und 28 mit den beiden Arbeitsleitungen 4 und 5 verbunden. Ein erster Eingang des Regelventils 24 ist ebenfalls über die beiden Rückschlagventile 27 und 28 mit den beiden Arbeitsleitungen 4 und 5 verbunden, während ein zweiter Eingang mit dem Hydraulikmedium-Tank 23 in Verbindung steht.

Der von der Vorsteuereinrichtung 12 erzeugte Steuerdruck hat deshalb eine doppelte Funktion: Einerseits legt er den in den Arbeitsleitungen 4 und 5 herrschenden und an dem Hydromotor 6 angreifenden Arbeitsdruck sowie die Drehrichtung des Hydromotors 6 über das Fahrsteuerventil 3 fest. Andererseits wirkt er über das Wechselventil 261 auf das Regelventil 24 so ein, daß die erste Stellkammer 25 mit zunehmenden Steuerdruck zunehmend mit Stelldruck beaufschlagt wird, so daß der Hydromotor 6 in Richtung auf ein verringertes Verdrängungsvolumen zurückgeschwenkt wird. Durch beide Maßnahmen, nämlich die Erhöhung des Arbeitsdrucks in der jeweiligen Arbeitsleitung 4 und 5 und die Verringerung des Verdrängungsvolumens des Hydromotors 6 wird die von dem Hydromotor 6 abgetriebene Drehzahl erhöht und somit beispielsweise die Fahrgeschwindigkeit eines Fahrzeugs oder die Drehgeschwindigkeit eines Drehwerks vergrößert. Dabei ist jedoch dafür Sorge zu tragen, daß die Drehzahl des Hydromotors einen kritischen Wert nicht übersteigt und ein Überdrehen des Hydromotors 6, die zu einer Schädigung führen würde, vermieden wird. Dazu greift an dem Regelventil 24 erfindungsgemäß nicht nur der Steuerdruck sondern auch der jeweilige Arbeitsdruck an, wobei das Regelventil 24 die erste Stellkammer 29 der Verstelleinrichtung 7 zu dem Hydraulikmedium-Tank 23 mit zunehmendem Arbeitsdruck entlüftet. Dadurch wird der Hydromotor 6 auf ein größeres Verdrängungsvolumen zurückgeschwenkt, wenn in der Arbeitsleitung ein zu großer Arbeitsdruck ansteht, der zu einem Überdrehen des Hydromotors 6 führen könnte.

Die erfindungsgemäße Ausgestaltung vereint dabei einerseits die Funktion der doppelten Ausnutzung des Steuerdrucks sowohl zum Einstellen des Arbeitsdrucks als auch des Verdrängungsvolumens des Hydromotors 6 mit der weiteren Funktion, daß ein Überdrehen des Hydromotors 6 dadurch vermieden wird, daß auf das Regelventil 24 der Arbeitsdruck in entgegengesetzter Richtung einwirkt.

Zur Druckabsicherung der Arbeitsleitungen 4 und 5 dienen zwei seriell angeordnete Druckbegrenzungsventile 31 und 32 mit Rückschlagfunktion, die die jeweils Hochdruck führende Arbeitsleitung zu der jeweils Niederdruck führenden Arbeitsleitung hin entlastet, wenn der Arbeitsdruck in der Hochdruck führenden Arbeitsleistung einen vorgegebenen Schwellwert überschreitet.

In den Arbeitsleitungen 4 und 5 ist ferner ein Bremsventil 33 vorgesehen. Der Zweck des Bremsventils 33 ist es, im Schiebebetrieb, beispielsweise bei der Talfahrt eines hydrostatischen Fahrantriebs oder dem Bergabschwenken eines Drehwerks eines auf einer schiefen Ebene stehenden Baggers, ein Bremsmoment zu erzeugen.

Das Bremsventil ist im Ausführungsbeispiel als 3/2-Wegeventil ausgebildet. In der Neutralstellung 34 ist das Bremsventil 33 geschlossen. Das Bremsventil 33 wird von der Druckdifferenz in dem mit dem Fahrsteuerventil 3 verbundenen ersten Arbeitsleitungs-Abschnitten 4a und 5a angesteuert. Steigt der Druck in einer dieser Arbeitsleitungs-Abschnitte 4a und 5a an, so wird das Bremsventil 33 in eine seiner beiden Arbeitsstellungen 35 oder 36 verschoben. Während der Hinfluß des Hydraulikmediums von der Hydropumpe 2 zu dem Hydromotor 6 über eines der beiden Rückschlagventile 8 und 9 erfolgt, ist das gegenüberliegende Rückschlagventil 9 bzw. 8 geschlossen und der Rückfluß erfolgt über das Bremsventil 33 und eines der beiden Rückschlagventile 37 und 38.

Im normalen Arbeitsbetrieb drosselt deshalb das Bremsventil 33 den Rückfluß nur unwesentlich. Beim Schiebebetrieb hingegen ist der Druck in den ersten Arbeitsleitungs-Abschnitten 4a und 5a gering oder sogar Null, da der Geber 11 im Schiebebetrieb nicht bzw. nicht mehr ausgeschwenkt ist. Der Hydromotor 6 arbeitet bei dem Schiebebetrieb als Hydropumpe und baut in einer der beiden zweiten Arbeitsleitungs-Abschnitte 4b bzw. 5b einen Staudruck auf. Der Staudruck entsteht, da das Hydraulik:medium in dem Schiebebetrieb nur gedrosselt über das Bremsventil 33 abfließen kann, da das Bremsventil 33 in diesem Betriebszustand von seiner Neutralstellung 34 nicht oder nur unwesentlich ausgelenkt ist. Der sich aufbauende Staudruck stützt den Hydromotor 6 ab, d. h. die Drehzahl des Hydromotors 6 wird durch den Staudruck vermindert.

Der sich in dem ersten Arbeitsleitungs-Abschnitten 4a, 5a aufbauende Staudruck hat noch eine weitere Funktion. Über die Rückschlagventile 28 und 27 wird nämlich das Regelventil 24 aufgrund des bei dieser Betriebsart entfallenden Steuerdrucks so beaufschlagt, daß die erste Stelldruckkammer 29 zu dem Druckmedium-Tank 23 hin belüftet wird und der Hydromotor 6 auf ein großes Verdrängungsvolumen verstellt wird. Dies erhöht die Bremswirkung, da der als Pumpe wirkende Hydromotor 6 dadurch stromaufwärts des Bremsventils 33 einen noch größeren Staudruck aufbaut.

Bei der Rückführung des Gebers 11 in seine Neutralstellung wird darüber hinaus eine weiche, ruckfrei Verzögerung erreicht.

Wesentliche Vorteile der erfindungsgemäßen Ausgestaltung bestehen einerseits in einem nahezu ruckfreien Anfahren auf einen großen Schwenkwinkel des Hydromotors 6 bei einem großen Drehmoment und einem hohen Wirkungsgrad. Dabei werden aus dem Stand der Technik bekannte Schwingungsprobleme beim Beschleunigen vermieden. Das Verzögerungsverhalten des erfindungsgemäßen hydrostatischen Getriebes 1 ist relativ weich. Durch die beschriebene Bremswirkung wird eine unnötige Ölerwärmung vermieden. Die erfindungsgemäße Lösung ist relativ kostengünstig.

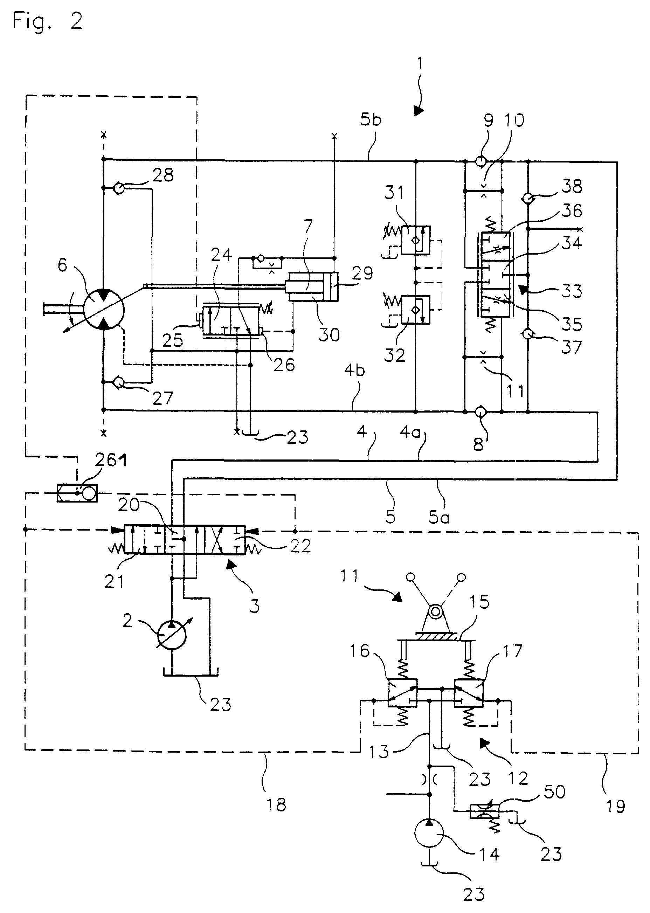

Fig. 2 zeigt ein zweites Ausführungsbeispiel des erfindungsgemäßen hydrostatischen Getriebes 1. Dabei sind bereits beschriebene Elemente mit übereinstimmenden Bezugszeichen versehen, so daß sich insoweit eine wiederholende Beschreibung erübrigt.

Der Unterschied zu dem anhand von Fig. 1 bereits beschriebenen Ausführungsbeispiel besteht: darin, daß zwischen der Druckquelle 14 und der Vorsteuereinrichtung 12 einerseits und dem Hydraulikmedium-Tank 23 andererseits ein Einstellventil 50 in Form eines Inchventils angeordnet ist. Das Einstellventil 50 gestattet eine Einstellung des der Vorsteuereinrichtung 12 zugeführten Eingangsdrucks und somit einer Übersteuerung des Steuerdrucks. Dadurch wird ein Kriechgang oder ein Notstop-Betrieb ermöglicht.

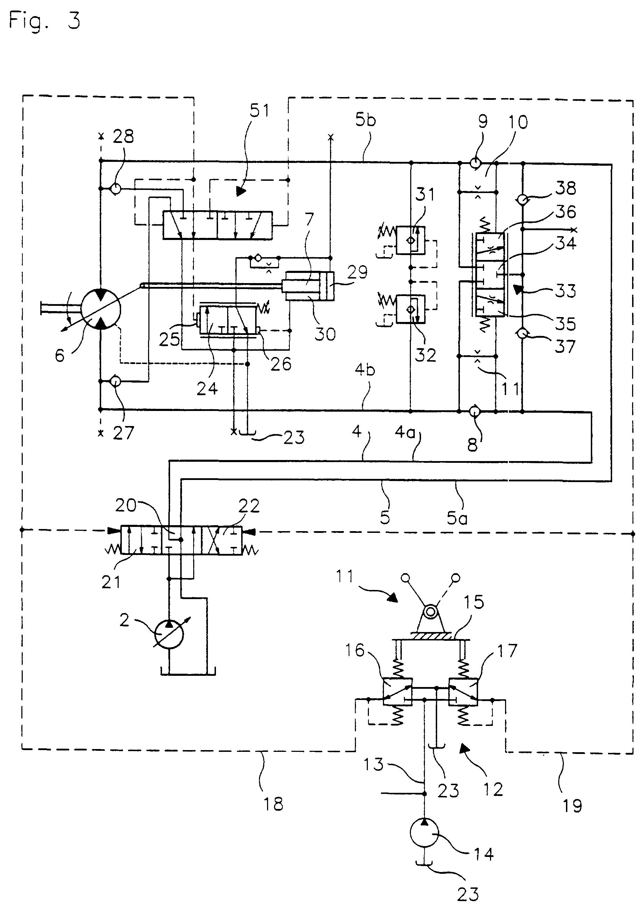

Fig. 3 zeigt ein weiteres Ausführungsbeispiel des erfindungsgemäßen hydrostatischen Getriebes 1. Auch hier sind bereits beschriebene Elemente mit übereinstimmenden Bezugszeichen versehen, so daß bezüglich dieser Elemente auf die vorstehende Beschreibung verwiesen werden kann.

Das in Fig. 3 dargestellte Ausführungsbeispiel unterscheidet sich von dem anhand von Fig. 1 bereits beschriebenen Ausführungsbeispiel dadurch, daß auf das Wechselventil 261 verzichtet worden ist und die beiden Steuerleitungen 18 und 19 zu einem dem Regelventil 24 vorgeschalteten Umschaltventil 51 geführt sind. Ferner sind die beiden ersten Arbeitsleitungs-Abschnitte 4a und 5b über die Rückschlagventile 27 und 28 ebenfalls zu dem als 6/2-Wegeventil ausgebildeten Umschaltventil 51 geführt. Das Umschaltventil 51 wird von der Druckdifferenz der beiden in den Steuerleitungen 18 und 19 herrschenden Steuerdrücke angesteuert und verbindet je nachdem, welche der beiden Steuerleitungen 18 und 19 mit Steuerdruck beaufschlagt ist, die jeweils Steuerdruck führende Steuerleitung bzw. 19 mit der ersten Druckkammer 25 des Regelventils 24. Gleichzeitig verbindet das Umschaltung 51 denjenigen zweiten Arbeitsleitungs-Abschnitt 4b bzw. 5b, der jeweils den Hochdruck führt, mit dem Regelventil 24 und der Verstelleinrichtung 30, insbesondere mit der zweiten Druckkammer 26 des Regelventils 24. Die Rückschlagventile 27 und 28 können bei dieser Ausgestaltung ggf. auch entfallen.

Selbstverständlich können auch die beiden in Fig. 2 und 3 dargestellten Ausführungsbeispiele ohne weiteres miteinander kombiniert werden, d. h. das Einstellventil 50 kann auch bei dem Ausführungsbeispiel der Fig. 3 zwischen der Druckquelle 14 und dem Hydraulikmedium-Tank 23 eingebaut sein.

## Patentansprüche

1. Hydrostatisches Getriebe (1) mit
zumindest einer Hydropumpe (2),
zumindest einem über Arbeitsleitungen (4, 5) mit der Hydropumpe (2) verbundenen, verstellbaren Hydromotor (6),
einem in den Arbeitsleitungen (4, 5) angeordneten Fahrsteuerventil (3) zum Einstellen des von der Hydropumpe (2) zu dem Hydromotor (6) strömenden Förderstroms,
einer Verstelleinrichtung (7) zum Verstellen des Verdrängungsvolumens des Hydromotors (6) und
einem Regelventil (24) zum Regeln eines die Verstelleinrichtung (7) betätigenden Stelldrucks,
einer Vorsteuereinrichtung (12), die in Abhängigkeit von einem Geber (11) einen Steuerdruck erzeugt, der auf das Fahrsteuerventil (3) zum Einstellen des von der Hydropumpe (2) zu dem Hydromotor (6) strömenden Förderstroms einwirkt,
**dadurch gekennzeichnet,**
**daß** der von der Vorsteuereinrichtung (12) erzeugte Steuerdruck auf das Regelventil (24) zum Einstellen des Verdrängungsvolumens des Hydromotors (6) einwirkt, und daß Regelventil (24) von der Druckdifferenz zwischen dem in den Arbeitsleitungen (4, 5) an dem Hydromotor (6) herrschenden Arbeitsdruck und dem von der Vorsteuereinrichtung (12) erzeugten Steuerdruck angesteuert wird.

2. Hydrostatisches Getriebe nach Anspruch 1,
**dadurch gekennzeichnet,**
**daß** an die Vorsteuereinrichtung (12) zwei Steuerleitungen (18, 19) angeschlossen sind und bei Betätigung des Gebers (11) in eine erste Fahrrichtung eine erste Steuerleitung (18) und bei Betätigung des Gebers (11) in eine zweite Fahrrichtung eine zweite Steuerleitung (19) mit Steuerdruck beaufschlagt wird und
**daß** das Fahrsteuerventil (3) von der Druckdifferenz zwischen den beiden Steuerleitungen (18, 19) angesteuert wird, um in Abhängigkeit von der Fahrrichtung entweder eine erste oder eine zweite Arbeitsleitung (4, 5) mit dem von der Hydropumpe (2) erzeugten Arbeitsdruck zu Beaufschlagen.

3. Hydrostatisches Getriebe nach Anspruch 2,
**dadurch gekennzeichnet,**
**daß** zwischen den Steuerleitungen (18, 19) und dem Regelventil (24) ein Wechselventil (261) oder zwei Rückschlagventile angeordnet ist bzw. sind, so daß einer ersten Druckkammer (25) des Regelventils (24) jeweils der höhere in den beiden Steuerleitungen (18, 19) herrschende Steuerdruck zugeführt wird.

4. Hydrostatisches Getriebe nach einem der Ansprüche 1 bis 3,
**dadurch gekennzeichnet,**
**daß** zwischen den Arbeitsleitungen (4, 5) und dem Regelventil (24) ein Wechselventil oder zwei Rückschlagventile (28, 27) angeordnet ist bzw. sind, so daß einer zweiten Druckkammer (26) des Regelventils (24) jeweils der höhere in den beiden Arbeitsleitungen (4, 5) an dem Hydromotor (6) herrschende Arbeitsdruck zugeführt wird.

5. Hydrostatisches Getriebe nach Anspruch 2,
**dadurch gekennzeichnet,**
**daß** zwischen den Steuerleitungen (18, 19) und dem Regelventil (24) sowie zwischen den Arbeitsleitungen (4, 5) und dem Regelventil (24) ein Umschaltventil (51) angeordnet ist, so daß einer ersten Druckkammer (25) des Regelventils (24) jeweils der höhere in den beiden Steuerleitungen (18, 19) herrschende Steuerdruck zugeführt wird und daß einer zweiten Druckkammer (26) des Regelventils (24) jeweils der höhere in den beiden Arbeitsleitungen (4, 5) an dem Hydromotor (6) herrschende Arbeitsdruck zugeführt wird.

6. Hydrostatisches Getriebe nach einem der Ansprüche 1 bis 5,
**dadurch gekennzeichnet,**
**daß** das Regelventil (24) ein 3/2-Wegeventil ist, das eingangsseitig mit den Arbeitsleitungen (4, 5) und einem Hydraulikmedium-Tank (23) und ausgangsseitig mit einer ersten Stellkammer (29) der Verstelleinrichtung (7) verbunden ist.

7. Hydrostatisches Getriebe nach Anspruch 6,
**dadurch gekennzeichnet,**
**daß** eine zweite Stellkammer (30) der Verstelleinrichtung (7) mit den Arbeitsleitungen (4, 5) verbunden ist.

8. Hydrostatisches Getriebe nach einem der Ansprüche 1 bis 7,
**dadurch gekennzeichnet,**
**daß** ein Bremsventil (33) vorgesehen ist, das von der Druckdifferenz in zwei mit dem Fahrsteuerventil (3) verbundenen ersten Arbeitsleitungs-Abschnitten (4a, 5a) angesteuert wird, wobei die ersten Arbeitsleitungs-Abschnitte (4a, 5a) jeweils über erste Rückschlagventile (8, 9) mit zweiten Arbeitsleitungs-Abschnitten (4b, 5b) verbunden sind, die an dem Hydromotor (6) angeschlossen sind.

9. Hydrostatisches Getriebe nach Anspruch 8,
**dadurch gekennzeichnet,**
**daß** das Bremsventil (33) eingangsseitig mit jeder der beiden zweiten Arbeitsleitungs-Abschnitte (4b, 5b) und ausgangsseitig über zweite Rückschlagventile (37, 38) mit jeder der beiden ersten Arbeitsleitungs-Abschnitte (4a, 5a) verbunden ist.

10. Hydrostatisches Getriebe nach Anspruch 9,
**dadurch gekennzeichnet,**
**daß** das Bremsventil (33) ein 3/3-Wegeventil ist, das in einer Neutralstellung (34) die zweiten Arbeitsleitungs-Abschnitte (4b, 5b) von den ersten Arbeitsleitungs-Abschnitten (4a, 5a) trennt und in einer ersten und zweiten Arbeitsstellung (35, 36) eine der beiden zweiten Arbeitsleitungs-Abschnitte (4b, 5b) über eines der zweiten Rückschlagventile (37, 38) mit dem nicht druckführenden ersten Arbeitsleitungs-Abschnitt (4a, 5a) verbindet.

11. Hydrostatisches Getriebe nach einem der Ansprüche 1 bis 10,
**dadurch gekennzeichnet,**
**daß** die Vorsteuereinrichtung (12) mit einer Druckquelle (14) verbunden ist und zwischen der Druckquelle (14) und einem Hydraulikmedium-Tank (23) ein Einstellventil (50) angeordnet ist.

## Claims

1. Hydrostatic transmission (1) with
at least one hydraulic pump (2),
at least one adjustable hydraulic motor (6) , connected to the hydraulic pump (2) via working lines (4, 5),
a travelling control valve (3), arranged in the working lines (4, 5), for setting the delivery flow flowing from the hydraulic pump (2) to the hydraulic motor (6),
an adjusting device (7) for adjusting the displacement volume of the hydraulic motor (6),
a regulating valve (24) for regulating a setting pressure actuating the adjusting device (7), and
a pilot control device (12) which generates, in dependence on a transmitter (11), a control pressure which acts on the travelling control valve (3) for setting the delivery flow flowing from the hydraulic pump (2) to the hydraulic motor (6),
**characterised in that** the control pressure generated by the pilot control device (12) acts on the regulating valve (24) to set the displacement volume of the hydraulic motor (6), and **in that** the regulating valve (24) is controlled by the pressure difference between the working pressure prevailing in the working lines (4, 5) at the hydraulic motor (6) and the control pressure generated by the pilot control device (12).

2. Hydrostatic transmission according to Claim 1,
**characterised in that** two control lines (18, 19) are connected to the pilot control device (12), and control pressure is admitted to a first control line (18) on actuation of the transmitter (11) in a first travelling direction and to a second control line (19) on actuation of the transmitter (11) in a second travelling direction, and **in that** the travelling control valve (3) is controlled by the pressure difference between the two control lines (18, 19), in order to admit the working pressure generated by the hydraulic pump (2) either to a first or a second working line (4, 5) in dependence on the travelling direction.

3. Hydrostatic transmission according to Claim 2,
**characterised in that** one shuttle valve (261) or two nonreturn valves is or are arranged between the control lines (18, 19) and the regulating valve (24), so that the respectively higher control pressure prevailing in the two control lines (18, 19) is supplied to a first pressure chamber (25) of the regulating valve (24).

4. Hydrostatic transmission according to one of Claims 1 to 3, **characterised in that** one shuttle valve or two nonreturn valves (28, 27) is or are arranged between the working lines (4, 5) and the regulating valve (24), so that the respectively higher working pressure prevailing in the two working lines (4, 5) at the hydraulic motor (6) is supplied to a second pressure chamber (26) of the regulating valve (24).

5. Hydrostatic transmission according to Claim 2,
**characterised in that** a switch-over valve (51) is arranged between the control lines (18, 19) and the regulating valve (24) and also between the working lines (4, 5) and the regulating valve (24), so that the respectively higher control pressure prevailing in the two control lines (18, 19) is supplied to a first pressure chamber (25) of the regulating valve (24) and that the respectively higher working pressure prevailing in the two working lines (4, 5) at the hydraulic motor (6) is supplied to a second pressure chamber (26) of the regulating valve (24).

6. Hydrostatic transmission according to one of Claims 1 to 5, **characterised in that** the regulating valve (24) is a 3/2-way valve which is connected, on the inlet side, to the working lines (4, 5) and a hydraulic-medium tank (23) and, on the outlet side, to a first setting chamber (29) of the adjusting device (7).

7. Hydrostatic transmission according to Claim 6,
**characterised in that** a second setting chamber (30) of the adjusting device (7) is connected to the working lines (4, 5).

8. Hydrostatic transmission according to one of Claims 1 to 7, **characterised in that** there is provided a brake valve (33) which is controlled by the pressure difference in two first working-line sections (4a, 5a) connected to the travelling control valve (3), the first working-line sections (4a, 5a) each being connected via first nonreturn valves (8, 9) to second working-line sections (4b, 5b) connected to the hydraulic motor (6).

9. Hydrostatic transmission according to Claim 8,
**characterised in that** the brake valve (33) is connected, on the inlet side, to each of the two second working-line sections (4b, 5b) and, on the outlet side, via second nonreturn valves (37, 38) to each of the two first working-line sections (4a, 5a).

10. Hydrostatic transmission according to Claim 9,
**characterised in that** the brake valve (33) is a 3/3-way valve which, in a neutral position (34), separates the second working-line sections (4b, 5b) from the first working-line sections (4a, 5a) and, in a first and second working position (35, 36), connects one of the two second working-line sections (4b, 5b) via one of the second nonreturn valves (37, 38) to the first working-line section (4a, 5a) not carrying pressure.

11. Hydrostatic transmission according to one of Claims 1 to 10, **characterised in that** the pilot control device (12) is connected to a pressure source (14) and a setting valve (50) is arranged between the pressure source (14) and a hydraulic-medium tank (23).

## Revendications

1. Transmission hydrostatique (1) comportant au moins une pompe hydraulique (2),
au moins un moteur hydraulique réglable (6), qui est relié à la pompe hydraulique (2) par l'intermédiaire de canalisations de travail (4, 5),
une soupape de commande de déplacement (3) disposée dans la canalisation de travail (4, 5) et servant à régler le flux de refoulement circulant depuis la pompe hydraulique (2) en direction du moteur hydraulique (6),
un dispositif de réglage (7) servant à régler le volume de refoulement du moteur hydraulique (6), et
une soupape de régulation (24) servant à régler une pression de réglage actionnant le dispositif de réglage (7),
un dispositif de commande pilote (12), qui produit, en fonction d'un transmetteur (11), une pression de commande, qui agit sur la soupape de commande de déplacement (3) pour régler le flux de refoulement qui circule depuis la pompe hydraulique (2) en direction du moteur hydraulique (6),
**caractérisée en ce que** la pression de commande produite par le dispositif de commande pilote (12) agit sur la soupape de régulation (24) pour régler le volume de refoulement du moteur hydraulique (6) et que la soupape de régulation (24) est commandée par la différence de pression entre la pression de travail, qui règne dans les canalisations de travail (4, 5) au niveau du moteur hydraulique (6), et la pression produite par le dispositif de commande pilote (12).

2. Transmission hydrostatique selon la revendication 1, **caractérisée en ce**
**que** deux canalisations de commande (18, 19) sont raccordées au dispositif de commande pilote (12) et qu'une première canalisation de commande (18) est chargée par la pression de commande lors de l'actionnement du transmetteur (11) dans une première direction de déplacement et qu'une seconde canalisation de commande (19) est chargée par la pression de commande lors de l'actionnement du générateur (11) dans une seconde direction de déplacement, et
**que** la soupape de commande de déplacement (3) est commandée par la différence de pression entre les deux canalisations de commande (18, 19), de manière à charger, en fonction de la direction de déplacement, une première ou une seconde canalisation de travail (4, 5) avec la pression de travail produite par la pompe hydraulique (2).

3. Transmission hydrostatique selon la revendication 2, **caractérisée en ce qu'**une soupape à deux voies (261) ou deux soupapes antiretour sont disposées entre les canalisations de commande (18, 19) et la soupape de régulation (24) de sortie que respectivement la pression de commande la plus élevée régnant dans les deux canalisations de commande (18, 19) est envoyée à une première chambre de pression (25) de la soupape de régulation (24).

4. Transmission hydrostatique selon la revendications 1 à 3, **caractérisée en ce**
**qu'**une soupape à deux voies ou deux soupapes antiretour (26, 27) est ou sont disposée(s) entre les canalisations de commande (18, 19) et la soupape de régulation (24) de sorte que respectivement la pression de travail plus élevée, qui règne dans les deux canalisations de travail (4, 5) au niveau du moteur hydraulique (6) est envoyée à une seconde chambre de pression (26) de la soupape de régulation (24).

5. Transmission hydrostatique selon la revendication 2, **caractérisée en ce**
**qu'**une soupape de commutation (51) est disposée entre les canalisations de commande (18, 19) et la soupape de régulation (24) ainsi qu'entre les canalisations de travail (4, 5) et la soupape de régulation (24) de sorte que respectivement la pression de commande plus élevée, qui règne dans les deux canalisations de commande (18, 19), est envoyée à une première chambre de pression (25) de la soupape de régulation (24) et qu'une seconde chambre de pression (26) de la soupape de régulation (24) est envoyée respectivement à la pression de travail plus élevée qui règne dans les deux canalisations (4, 5) au niveau du moteur hydraulique (6).

6. Transmission hydrostatique selon l'une des revendications 1 à 5, **caractérisée en ce**
**que** la soupape de régulation (24) est une soupape à 3/2 voies, qui est reliée côté entrée aux canalisations de travail (4, 5) et à un réservoir de fluide hydraulique (23) et, côté sortie, à une première chambre de réglage (29) du dispositif de réglage (7).

7. Transmission hydrostatique selon la revendication 6, **caractérisée en ce**
**qu'**une seconde chambre de réglage (30) du dispositif de réglage 16) est reliée aux canalisations de travail (4, 5).

8. Transmission hydrostatique selon l'une des revendications 1 à 7, **caractérisée en ce**
**qu'**il est prévu une soupape de freinage (33), qui est commandée par la différence de pression dans deux premières sections (4a, 5a) des canalisations de travail, reliées à la soupape de commande de déplacement (3), les premières sections (4a, 5a) des canalisations de travail étant reliées respectivement par des premières soupapes antiretour (8, 9) des secondes sections (4b, 5b) des canalisations de travail, qui sont raccordées au moteur hydraulique (6).

9. Transmission hydrostatique selon la revendication 8, **caractérisée en ce**
**que** la soupape de freinage (33) est reliée, côté entrée, à chacune des deux secondes sections (4b, 5b) des canalisations de travail et, côté sortie, par l'intermédiaire de secondes soupapes antiretour (37, 38) à chacune des deux premières sections (4a, 5a) des canalisations de travail.

10. Transmission hydrostatique selon la revendication 9, **caractérisée en ce que** la soupape de freinage (33) est une soupape à 3/3 voies qui, dans une position neutre (34), sépare les secondes sections (4b, 5b) des canalisations de travail des premières sections (4a, 5a) des canalisations de travail et, dans une première et une seconde position de travail (35, 36), relie l'une des deux secondes sections (4b, 5b) des canalisations de travail par l'intermédiaire de l'une des deux secondes soupapes antiretour (37, 38), à la première section (4a, 5a) de la canalisation de travail, qui n'applique aucune pression.

11. Transmission hydrostatique selon l'une des revendications 1 à 10, **caractérisée en ce**
**que** le dispositif de commande pilote (12) est relié à une source de pression (14) qu'une soupape de réglage (50) est disposée entre la source de pression (14) et un réservoir de fluide hydraulique (23).
